# EUROPEAN PATENT APPLICATION

(11) **EP 1 300 483 A2**
(43) Date of publication of application: **09.04.2003**
(21) Application number: 02022131.3
(22) Date of filing: 02.10.2002
(51) Int. Cl.: C22F 1/04, C22F 1/06, B30B 11/00, B01J 3/00

(54) **Method and apparatus for reducing blow holes existing in a light alloy cast by HIP, and molten salt and a salt core used for the method**

(30) Priority: 02.10.2001 JP 2001305967; 22.03.2002 JP 2002080171; 27.08.2002 JP 2002246026
(71) Applicant: Sintokogio, Ltd., Nagoya-shi, Aichi-ken (JP)
(72) Inventor: Kato, Tatsuhiko, c/o Sintokogio, Ltd., Toyokawa-shi, Aichi-ken (JP)
(74) Representative: Röthinger, Rainer

(57) **Abstract**

A method for reducing blow holes existing in a light alloy cast by using the hot isostatic process (HIP), comprising the steps of heating the light alloy cast at a temperature that is 5-100 °C lower than a temperature at which the liquid phase of the light alloy cast appears, and pressing the heated light alloy cast by a liquid pressure media, thereby reducing the blow holes existing in it.

## Description

### Field of the Invention

This invention relates to an apparatus and a method for reducing blow holes produced in a light alloy cast, such as an aluminum alloy cast, a magnesium alloy cast, etc., by using the hot isostatic process (HIP), and also relates to a molten salt and a salt core used for such a method.

### Description of the Prior Art

Conventional casting methods for producing an aluminum alloy cast and a magnesium alloy cast are the gravity casting process using a sand or metal mold, the low pressure casting process, the high pressure die-cast process, the squeeze die-cast process, etc.

However, any cast that is produced by using any of the processes mentioned above has a problem of existing blow holes and thus has a lesser quality than that of a forging. Accordingly, casting engineers are trying to deal with that problem by improving casting plans, casting conditions, deadheads, etc., or by reducing the pressure in the molding cavity. However, blow holes still remain in the cast, and therefore its quality is unreliable. Thus, an aluminum alloy, a nickel alloy, a titanium alloy, etc., that are used, for example, for an airplane, are treated with the hot isostatic process using a gas media such as argon or nitrogen, to thereby reduce blow holes to enhance their reliability as machinery parts.

However, the HIP machine used for that treatment is very expensive, and it takes a long time for each treatment. Further, since the gas to be used is expensive, the running cost for the treatment is high. Thus, the use of such a HIP machine is not suitable for reducing blow holes existing in a light alloy cast.

Further, sand cores are often used to produce a light alloy cast, but particles of the sand cores tend to adhere to the alloy cast. These particles must be completely removed from the cast before the HIP treatment is carried out, or otherwise they may enter the hot isostatic processing machine and may cause its operation to deteriorate or to stop.

The present invention has been conceived in view of the problems discussed above.

The purpose of this invention is to provide a method and an apparatus for the HIP that use a liquid pressure media, and that can reduce blow holes in a light alloy at a low cost and also to provide a molten salt and a salt core that are used for the method.

### Summary of the Invention

To the above end, the method of the present invention is a method for reducing blow holes in a light alloy cast by using the hot isostatic process, comprising the steps of heating the light alloy cast at a temperature that is 5-100 °C lower than a temperature at which the liquid phase of the light alloy is produced and pressing the heated light alloy cast by a liquid pressure media, thereby reducing the blow holes in it.

This invention treats a light alloy cast by the HIP using a salt instead of a gas, such as argon. In the method of the present invention, to collapse ingot pipings, holes, and the like that exist in the light alloy cast, such as an aluminum alloy cast, magnesium alloy cast, etc., the light alloy cast is heated at the temperature at which its liquid phase appears, and is also pressed by a liquid pressure media.

Salts that are used for a salt bath for the austemper process are used as the liquid pressure media from the viewpoints of their temperature to be used for collapsing the holes (that is, equal to or less than 600°C) and of their stability at that temperature and in the atmosphere. The salts to be used include sodium nitrate. potassium nitrate, barium nitrate, and a mixed salt comprising two or more of them. A stabilizer, such as sodium dichromate, potassium dichromate, etc., may be added to the salts.

The salts to be used also includes barium chloride, sodium chloride, potassium chloride, and a mixed salt comprising two or more of them. The chlorides of these salts may not be proper to use in a processing machine that uses steel, because these chlorides corrode steel.

The hydroxides of these salts may not be proper, since they may produce a coagulum in the processing machine, or may make it difficult to handle a workpiece to be treated.

The molten salt may be an ambient temperature molten salt, as, for example, aluminum chlorides. The molten salt has properties such that it can be quickly heated to a predetermined temperature, that the distribution of the temperature is uniform in it, and that its temperature can be finely adjusted.

Other features and advantages of the present invention will be understood from the description below.

### Brief Description of the Drawing

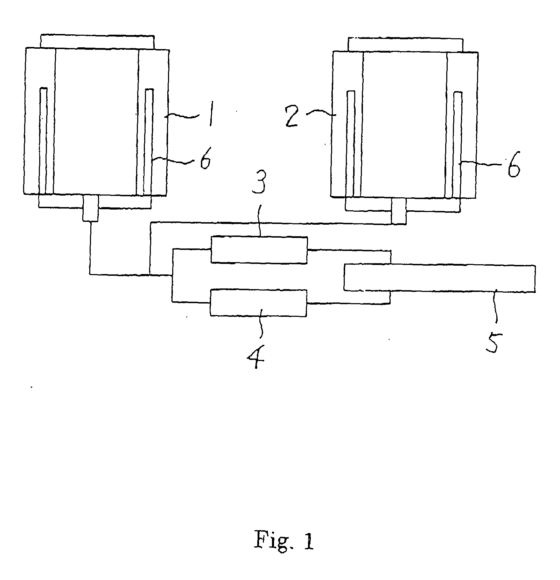

Fig. 1 is a schematic view showing an embodiment of a hot isostatic processing machine and the method for reducing blow holes existing in a light alloy cast in accordance with the present invention.

### Description of the Preferred Embodiments

Below the embodiments of the present invention are explained.

First, an embodiment of the hot isostatic processing machine of the present invention is explained by reference to the accompanying drawing (Fig. 1).

The processing machine includes two pressure vessels 1, 2, each holding therein a light alloy cast and liquid pressure media, a pressure intensifying device 3 for alternately supplying liquid pressure media to the pressure vessels 1, 2, a pressure reducing device 4 for alternately reducing the pressure of the liquid pressure media in the pressure vessels 1, 2, and a device 5 connected in fluid communication to the pressure intensifying device 3 and the pressure reducing device 4 for dissolving a salt into a liquid state and for holding the molten salt therein. An electric heater 6 is disposed in each pressure vessel.

In operating the hot isostatic processing machine configured as explained above, the pressure intensifying device 3 provides the liquid pressure media to one pressure vessel 1 so that a light alloy cast in the pressure vessel 1 is subjected to the HIP treatment, while a light alloy cast that has been treated in the other pressure vessel 2 is taken out from the vessel 2, and an untreated light alloy cast is put in it and heated. Thus, upon completion of the HIP treatment in the first pressure vessel 1, another HIP treatment commences in the second pressure vessel 2. Accordingly, the processing machine can enhance the productivity and can lower the cost for the treatment per cast (workpiece).

A HIP treatment was carried out on a light alloy cast by using the hot isostatic processing machine and by the way explained above. The light alloy cast was produced from an aluminum material AC4C, which is a casting material, by casting it in a sand mold. Bars of the light alloy cast, each of which has a shape for a tensile test and has a diameter of 8 mm at its parallel portion, are used for test pieces. These test piece bars were subjected to HIP treatments with the temperature of the liquid pressure media being varied, but its pressure was maintained constant, i.e.. at a pressure of 100 MPa, for all the test pieces. After the treatments of the test piece bars, their density was measured, and they were cut and the number of blow holes that appeared in the cut surface, and that were equal to or greater than 0.2 mm, was evaluated. The result is shown in Table 1.

Further, test piece bars that were the same as those explained above were also subjected to HIP treatments with the temperature of the liquid pressure media being kept at 540 °C, but its pressure was varied. After the treatments of the test piece bars, their density was measured, and they were cut and the number of blow holes that appeared in the cut surface, and that were equal to or greater than 0.2 mm, was evaluated. The result is shown in Table 2.

**Table 1**

| The relation between the treating temperatures, the density, and the blow holes (Pressure: 100 MPa) | | | |
|---|---|---|---|
| Temperature (°C) | Density (g/cm³) | The number of blow holes | Remark |
| untreated | 2.672 | 7.3 | -- |
| 420 | 2.672 | 7.2 | -- |
| 440 | 2.675 | 6.9 | -- |
| 460 | 2.680 | 2.7 | -- |
| 480 | 2.685 | 1.2 | -- |
| 500 | 2.690 | 0.8 | -- |
| 540 | 2.691 | 0.1 | -- |
| 560 | -- | -- | The liquid phase appeared. |

**Table 2**

| The relation between the treating pressure, the density, and the blow holes (Temperature: 540 °C) | | | |
|---|---|---|---|
| Pressure (MPa) | Density (g/cm³) | the number of Blow boles | Remark |
| untreated | 2.672 | 7.3 | -- |
| 50 | 2.673 | 7.3 | -- |
| 60 | 2.680 | 3.8 | -- |
| 70 | 2.682 | 2.3 | -- |
| 80 | 2.685 | 2.2 | -- |
| 90 | 2.688 | 0.6 | -- |
| 100 | 2.691 | 0.1 | -- |
| 110 | 2.692 | 0.1 | -- |
| 120 | 2.692 | 0.1 | -- |

In the treatments the liquid consisted of a mixed salt of 50% sodium nitrate and 50% potassium nitrate, and a stabilizer of 0.3% sodium dichromate was used as the liquid pressure media. The number of test piece bars per treatment was ten, and their average values are shown in the tables.

From Tables 1 and 2, it was found that the treating temperature should possibly be high but within a range in which the liquid phase of the test piece does not appear, and that the treating temperature could be any generally-used solution temperature for any test piece. It was also found that almost all blow holes could be eliminated if the treating pressure was equal to or greater than 90 MPa, and that if the treating pressure was equal to or more than 60 MPa, the blow holes could be substantially eliminated.

The structure of the test piece bars was observed. By the observation, eutetic particles of Si were found at eutetic portions between dendrites, but no change in the structure was found between the untreated and treated test piece bars. Further, almost no porosity was found in the untreated test piece bars, although such porosities are especially found in a cast produced using a sand mold. In some treated test piece bars the blow holes were not completely eliminated. This was caused by the involvement of air during casting and seems to be specifically caused by the involvement of nitrogen gas. The size of the blow holes was significantly smaller in the treated than in the untreated test piece bars.

Now the second embodiment is explained, wherein a proper molten salt is referred to.

The inventor found that if the molten salt is one that consists of 40-50% sodium nitrite, 40-50% potassium nitrate, and 1-10% sodium nitrate and has a melting point of 140-200°C (more preferably, 140-160 °C), it does not corrode (below 600 °C, as referred to above) the heat-resistant steel alloy that is used as a component of the hot isostatic processing machine, and is safe and stable for the workpiece. Further, if the salt, before it is dissolved, is a solid having a volume less than 10 mm³, it is not regulated by any Japanese laws.

### Example 1

Two test pieces as light alloy casts were produced from aluminum material AC4C, which is a casting material. Each test piece was in a step-like shape with step portions having 10 mm, 30 mm, and 50 mm thicknesses. Thermocouples were fixed to the central parts of the step portions of each test piece.

One test piece was put in a type of generally-used electric oven, which was kept at 500 °C. The other one was put in a salt bath of a molten salt that consisted of 50% sodium nitrite, 45% potassium nitrate, and 5% sodium nitrate and had a melting point of 143-150 °C, and that was kept at 500 °C. The time that the central portions of the steps of the test pieces took to reach 490 °C was measured. The results are shown in Table 3.

It is clear from Table 3 that the salt bath of the HIP in accordance with the present invention can more quickly heat a light alloy cast up to a desired temperature than can an electric oven. Thus, by heating a light alloy cast by using the salt bath before a HIP, and then by treating it by a HIP by using the same molten salt, the efficiency of the treatment is greatly enhanced.

**Table 3**

| Time (min) that the central parts of the step portions of the test piece took to reach a target temperature | | | |
|---|---|---|---|
| | 10 mm portion | 30 mm portion | 50 mm portion |
| Electric Oven | 27 min. | 64 min. | 129 min. |
| Salt Bath | 6 min. | 19 min. | 47 min. |

**Table 4**

| Change in weight of the aluminum cast (g) | | | |
|---|---|---|---|
| AC4CH cast | | ADC12 cast | |
| Before testing | 5 hours later | Before testing | 5 hours later |
| 98.75 | 98.75 | 98.88 | 98.88 |
| 99.14 | 99.14 | 98.79 | 98.79 |
| 99.08 | 99.08 | 98.77 | 98.77 |
| 98.84 | 98.84 | 98.85 | 98.85 |
| 99.03 | 99.03 | 98.95 | 98.95 |
| 98.88 | 98.88 | 98.83 | 98.83 |

Two test pieces of aluminum casts were produced. Both weighed about 100 g. One test piece was made of AC4CH, and the other of ADC12. These test pieces were immersed in the same salt bath of the molten salt described above (temperature was 500 °C), and the corrosion to the test pieces by the salt was examined. This testing was to measure the weight of the test pieces before the immersion and after they were immersed in the salt bath for 5 hours and then washed by water and then dried.

As is clear from the results shown in Table 4, there was no change in the weight of the test pieces after the immersion. Thus one can understand that a molten salt does not affect or react with a light alloy cast. Further, since the melting point of the salt is low, the salt adhering to the light alloy cast in the salt bath was kept in the liquid state until it was washed. Thus it could be easily removed.

Now the third embodiment of the present invention is explained.

In the third embodiment of the present invention, a molten salt that has a melting point of 190 ° C - 290 °C is used as the liquid pressure media. Further, a salt core that is made from a nitrate, and that has a melting point of 190 °C - 290 °C, is used for producing an aluminum alloy cast or a magnesium alloy cast, and the cast is then subjected to HIP treatment by using the liquid pressure media of a molten salt.

After the HIP treatment, if necessary the alloy cast may be subjected to a heat treatment, and washed by water. The water used to wash the alloy cast is concentrated by the nitrate concentration method, and the concentrated water is then returned to the HIP treatment.

The salt core can be produced by pouring a molten salt that has a melting point of 190 °C - 290 °C into a metal mold and then remolding it.

When a salt core is used for casting aluminum material the melting point of the salt must be high, or otherwise it will be melted during the casting. It was found that to make the composition of the salt of the core be the same as that of a salt used for a HIP and to cause the salt of the core to circulate in the HIP, the melting point of the salt of the core is preferably 190 °C - 280 °C.

It is important that after the alloy cast is washed, the nitrate contained in the washing water be concentrated 30 times by using the nitrate concentration method and be returned to the hot isostatic processing machine without discharging it.

### Example 2

Test piece casts, which had a thickness of 10 mm, 30 mm, or 50 mm, were produced from aluminum material AC4C using salt cores. Nitrates (mixed salts of sodium nitrate and potassium nitrate) that had a melting point of 145 °C, 195 °C, 220 °C, or 280°C were dissolved and poured into metal molds to produce the salt cores. The results of the tests (appearance of the salt cores after testing) are shown in Table 5.

**Table 5**

| Thickness of the cast: | 10 mm | 30 mm | 50 mm |
|---|---|---|---|
| Nitrate core (145 °C) | G | M | B |
| Nitrate core (195 °C) | G | G | M |
| Nitrate core (220 °C) | G | G | G |
| Nitrate core (280 °C) | G | G | G |

In Table 5, the symbol "G" denotes that there is no problem in the shape of the salt core after testing, "M" denotes that only a very small part of the salt has been dissolved, and that the contour of the salt core has changed slightly, and "B" denotes that the salt core has been dissolved, and the as-cast piece has been determined to be an acceptable product.

From the results shown in Table 5, it has been found that the salt for use as a salt core for casting must have a relatively high melting point. However, it is difficult to arrange a hot isostatic pressing machine that is suitable for a salt that has a high melting point. Thus it is not preferable to use a salt that has a melting point of 300 °C or more.

When no salt core is used in casting, a molten salt of nitride, which has a melting point of 145-290 °C, can be used for the HIP of the present invention.

Then, test pieces of aluminum casts, which were produced from AC4C or ADC12, and which weighed about 100 g each, were tested in a nitrate bath. To examine the effects of the salt, such as corrosion, on the test pieces, they were immersed in the nitrate bath for 5 hours and then washed by water and then dried. The change (g) in their weight after testing was measured. The results are shown in Table 6.

As is clear from the results shown in Table 6, that salt does not affect the aluminum casts. Further, since the melting point of the salt was low, the molten salt adhering to them was kept in the liquid state until it was washed. Thus it was able to be easily removed.

**Table 6**

| Change in weight (g) | | | |
|---|---|---|---|
| AC4CH cast | | ADC12 cast | |
| Before testing | 5 hours later | Before testing | 5 hours later |
| 98.75 | 98.75 | 98.88 | 98.88 |
| 99.14 | 99.14 | 98.79 | 98.79 |
| 99.08 | 99.08 | 98.77 | 98.77 |
| 98.84 | 98.84 | 98.85 | 98.85 |
| 99.03 | 99.03 | 98.95 | 98.95 |
| 98.88 | 98.88 | 98.83 | 98.83 |

## Claims

1. A method for reducing blow holes existing in a light alloy cast by using the hot isostatic process, comprising the steps of:
heating the light alloy cast at a temperature that is 5-100 °C lower than a temperature at which the liquid phase of the light alloy cast appears; and
pressing the heated light alloy cast by a liquid pressure media, thereby reducing the blow holes existing therein.

2. The method of claim 1, wherein the pressure for pressing the heated light alloy cast by the liquid pressure media is 60-120 MPa.

3. The method of claim 1, wherein the liquid pressure media is a molten salt.

4. The method of claim 1, wherein the light alloy cast is one of an aluminum alloy cast and a magnesium alloy cast.

5. The method of claim 1, wherein the liquid pressure media is a molten salt consisting of 40-50% sodium nitrite, 40-50% potassium nitrate, and 1-10% sodium nitrate and having a melting point of 140-200 °C.

6. The method of claim 1, wherein the liquid pressure media is a molten salt, and wherein the light alloy cast is heated and pressed by the molten salt by pressing the molten salt in a salt bath of the molten salt that is heated.

7. The method of claim 5 or 6, wherein the light alloy cast is one of an aluminum alloy cast and a magnesium alloy cast.

8. A molten salt for use for carrying out the method of claim 5, consisting of 40-50% sodium nitrite, 40-50% potassium nitrate, and 1-10% sodium nitrate and having a melting point of 140-200 °C.

9. The molten salt of claim 8, having a volume of 10 mm³ before being dissolved.

10. The method of claim 4, wherein the liquid pressure media is a molten salt that has a melting point of 190-290 °C.

11. The method of claim 4, wherein a salt core is used for producing one of the aluminum alloy cast and the magnesium alloy cast, the salt core being formed from a salt material of nitrate salts that has a melting point of 190-290°C, and wherein one of the aluminum alloy cast and the magnesium alloy cast is then pressed by a pressure media of a molten salt.

12. A core salt for use for carrying out the method of claim 11, produced by casting a molten salt that has a melting point of 190-290°C in a mold and remolding an as-cast salt after the molten salt solidifies.

13. The method of claim 11, further comprising the steps of:
heat-treating one of the aluminum alloy cast and the magnesium alloy cast, if necessary, after being pressed by the pressure media;
washing by water one of the pressed aluminum and magnesium alloy casts;
concentrating the water used for washing one of the pressed aluminum and magnesium alloy casts by the nitrate concentration method; and
returning the concentrated water to be used in the hot isostatic process.

14. The method of claim 4, wherein one of the aluminum and magnesium alloy casts is pressed by a nitrate salt that has a melting point of 145-290 °C, the method further comprising the steps of:
washing by water one of the pressed aluminum and magnesium alloy casts;
concentrating the water used for washing one of the pressed aluminum and magnesium alloy casts by the nitrate concentration method; and
returning the concentrated water to be used in the hot isostatic process that is performed by means of the molten salt.

15. The method of claim 1, wherein a first and a second pressure vessel, each for holding a light alloy cast, a single device for dissolving a salt and holding the molten salt, and a single pressure intensifying device connected in fluid communication to the first and second pressure vessels and the device for dissolving a salt are used, the method comprising the steps of:
heating the light alloy casts in the first and second pressure vessels at a temperature that is 5-100 °C lower than the temperature at which the liquid phase of the light alloy cast appears; and
alternately providing the liquid pressure media to the first pressure vessel and the second pressure vessel from the device for dissolving a salt by using the pressure intensifying device, thereby pressing the light alloy casts heated in the pressure vessels.

16. An apparatus for reducing blow holes existing in a light alloy cast by using the hot isostatic process, comprising:
a first and a second pressure vessel, each for holding a light alloy cast and a molten salt, each vessel having a means for heating the light alloy cast at a temperature that is 5-100 °C lower than a temperature at which the liquid phase of the light alloy cast appears;
a pressure intensifying device for alternately supplying liquid pressure media under a high pressure to the first pressure vessel and the second pressure vessel;
a pressure reducing device for alternately reducing the pressure of the liquid pressure media in the first and second pressure vessels; and
a device for dissolving a salt and holding the molten salt, the device being connected to the pressure intensifying device and the pressure reducing device.
